(19) Europäisches Patentamt
European Patent Office
Office européen des brevets

(11) **EP 2 057 052 B1**

(12) **EUROPÄISCHE PATENTSCHRIFT**

(45) Veröffentlichungstag und Bekanntmachung des Hinweises auf die Patenterteilung:
**11.04.2012 Patentblatt 2012/15**

(51) Int Cl.:
***B60W 20/00*** *(2006.01)* ***B60W 10/06*** *(2006.01)*
***B60W 10/08*** *(2006.01)*

(21) Anmeldenummer: **07787381.8**

(22) Anmeldetag: **11.07.2007**

(86) Internationale Anmeldenummer:
**PCT/EP2007/057108**

(87) Internationale Veröffentlichungsnummer:
**WO 2008/022846 (28.02.2008 Gazette 2008/09)**

(54) **ANSTEUERVORRICHTUNG UND VERFAHREN ZUM ANSTEUERN EINES HYBRIDANTRIEBS**

CONTROL APPARATUS AND METHOD FOR CONTROLLING A HYBRID DRIVE

DISPOSITIF DE COMMANDE ET PROCEDE DE COMMANDE D'UN GROUPE PROPULSEUR HYBRIDE

(84) Benannte Vertragsstaaten:
**DE FR GB IT**

(30) Priorität: **22.08.2006 DE 102006039400**

(43) Veröffentlichungstag der Anmeldung:
**13.05.2009 Patentblatt 2009/20**

(73) Patentinhaber: **Robert Bosch GmbH**
**70442 Stuttgart (DE)**

(72) Erfinder: **FALKENSTEIN, Jens-Werner**
**73434 Aalen (DE)**

(56) Entgegenhaltungen:
**EP-A- 1 743 794    WO-A1-2007/074002**
**DE-A1-102004 062 012    DE-A1-102005 044 828**

**Beschreibung**

**Stand der Technik**

Die Erfindung betrifft eine Ansteuervorrichtung eines Hybridantriebs, insbesondere eines Hybridantriebs eines Kraftfahrzeugs, mit mindestens einem Verbrennungsmotor und mindestens einem Elektromotor als Antriebsmaschinen, deren Drehmomente zu einem Gesamtdrehmoment gekuppelt werden.

Ansteuervorrichtungen der Eingangs genannten Art sind bekannt. Dabei kommen Steuerungsfunktionen und Steuerungsalgorithmen zum Einsatz, die zum Beispiel aus einer Drehzahl des Hybridantriebs und einer Drehmomentanforderung Stellgrößen für die Antriebsmaschinen erstellen. Bei einer Steuerung/Regelung der Drehzahl des Hybridantriebs muss die Ansteuereinrichtung die Drehmomentanforderung zwischen dem Elektromotor und dem Verbrennungsmotor aufteilen. Werden die Antriebsmaschinen parallel angesteuert, muss bei jeder der Antriebsmaschine eine Drehmomentreserve verbleiben, die bei einer Drehmomentanforderung einen schnellen Drehmomentaufbau und eine schnelle Reaktion auf Laständerungen ermöglicht. Die Drehmomentreserve des Verbrennungsmotors wird zum Beispiel im Leerlauf eines Ottomotors, der bei Lambda=1 (homogen) betrieben wird, durch Erhöhen der Luftzufuhr, verbunden mit einer Spätverstellung des Zündwinkels eingestellt. Eine derartige, durch Frühverstellung des Zündwinkels kurzfristig abrufbare Drehmomentreserve des Verbrennungsmotors in einem Betriebspunkt mit charakteristischer Drehzahl kann zur Drehzahlregelung genutzt werden, ist jedoch mit einem erhöhten Kraftstoffverbrauchund erhöhten Abgasemissionen verbunden.

Aus der gattungsgemäßen DE102004062012 A1 ist eine Drehzahlregelung bekannt, wobei diese aus zwei Reglern (PI / P -Regler) besteht, die aus unterschiedlichen Regletanteilen (P / I) zusammengesetzt werden.

**Offenbarung der Erfindung**

Die erfindungsgemäße Ansteuervorrichtung weist eine Regeleinrichtung auf, die zur Drehzahlregelung für die Antriebsmaschinen je ein Stellsignal erstellt, wobei ein auf den Elektromotor wirkendes erstes Stellsignal gegenüber einem auf den Verbrennungsmotor wirkenden zweiten Stellsignal eine höhere Dynamik aufweist. Durch eine derartige Regeleinrichtung wird eine Drehzahlregelung des Hybridantriebs mit hoher Regelqualität ermöglicht, ohne eine schnell abrufbare Drehmomentreserve am Verbrennungsmotor vorzuhalten. Die Beeinflussung der Drehmomente der Antriebsmaschinen wird dynamisch in einen ersten Pfad zur Ansteuerung des Elektromotors und einen zweiten Pfad zur Ansteuerung des Verbrennungsmotors aufgeteilt, wobei der erste Pfad schneller reagiert als der zweite Pfad. Dabei sollen sich die Drehmomente der Antriebsmaschinen (Elektromotor und Verbrennungsmotor) konstruktiv ergänzen. Der erste Pfad hat die Aufgabe, mit hoher Dynamik auf . Drehzahlabweichungen von einem Sollwert - zum Beispiel in Folge einer Störung - zu reagieren. Der zweite Pfad reagiert mit reduzierter Dynamik auf die Abweichungen, regelt die Ungenauigkeiten jedoch bis zu einer vorgegebenen Schwelle an eine Soll-Drehzahl heran. Diese Aufteilung ist vorteilhaft, da die Drehmomentansteuerung eines modernen Elektromotors im Vergleich mit der Ansteuerung der Luftzu fuhr eines Verbrennungsmotors (Saugrohrdynamik), zum Beispiel eines Ottomotors im Homogenbetrieb, eine sehr viel höhere Dynamik aufweist.

Nach einer Weiterbildung der Erfindung ist vorgesehen, dass die Regeleinrichtung das erste Stellsignal und das zweite Stellsignal aus einem Drehzahlvergleich einer Ist-Drehzahl mit einer Soll-Drehzahl erstellt. Die Regeleinrichtung ermittelt zum Beispiel eine Drehzahlabweichung und gibt aufgrund dieser Abweichung koordinierte Stellgrößen an die Antriebsmaschinen aus. Zwischen der Regeleinrichtung und mindestens einer der Antriebsmaschinen kann ein Stellglied angeordnet sein, das ein Stellsignal der Regeleinrichtung beziehungsweise Ansteuervorrichtung in eine Stellgröße der einzelnen Antriebsmaschine wandelt. Die Drehzahlabweichung wird durch Bildung einer Drehzahldifferenz von der Soll-Drehzahl und der Ist-Drehzahl bestimmt.

Insbesondere ist vorgesehen, dass das erste Stellsignal nicht-ausregelnd ist und das zweite Stellsignal aus einem ausregelenden Anteil und einem nicht-ausregelnde Anteil besteht. Das erste Stellsignal sorgt bei Auftreten einer Drehzahlabweichung (Regelabweichung) mit hoher Dynamik für ein schnelles, jedoch kurzfristiges Entgegenwirken des Elektromotors gegen die Drehzahlabweichung. Das zweite Stellsignal hat einen ausregelnden Anteil, der dafür sorgt, dass der Verbrennungsmotor die Drehzahlabweichungen in einem von der Dynamik des Verbrennungsmotors und der Regeleinrichtung vorgegebenen Zeitrahmen ausregelt, sodass die Drehzahlabweichung kleiner als eine Ausregelschwelle ist, auf die die Regeleinrichtung nicht mehr reagiert. Neben dem ausregelnden Anteil weist das zweite Stellsignal einen nicht-ausregelenden Anteil auf, der zwar eine niedrigere Dynamik besitzt als das erste Stellsignal, die Drehzahlabweichung jedoch nicht ausregeln kann.

Mit Vorteil ist vorgesehen, dass die Regeleinrichtung eine PI-Regeleinrichtung und/oder PID-Regeleinrichtung ist. Derartige Standard-Regeleinrichtungen lassen sich zum Beispiel durch Elektronikkomponenten leicht realisieren. Ihr Regelverhalten lässt sich im Vornherein durch entsprechende Simulationen bestimmen. Die PI-Regeleinrichtung (Proportional-Integral-Regeleinrichtung) und die PID-Regeleinrichtung (Proportional-Integral-Differential-Regeleinrichtung) verbinden die Eigenschaften einer raschen Reaktion mit einem vollständigen oder nahezu vollständigen Ausregeln einer Regelabweichung.

Insbesondere ist vorgesehen, dass ein Integralanteil eines Regelausgangssignals ausregelnd und ein Proportionalanteil des Regelausgangssignals und/oder ein Differenzialanteil des Regelausgangssignals nicht ausregelnd ist/ sind. Die unterschiedlichen Anteile der PI- beziehungsweise PID-Regeleinrichtungen (Proportionalanteil, Integralanteil und Differenzialanteil) werden in der Regeleinrichtung separiert und als Stellsignale oder Anteile von Stellsignalen an die Antriebsmaschinen ausgegeben. Dabei weisen der Proportionalanteil und der Differenzialanteil eine hohe Dynamik auf, wobei der Differenzialanteil noch einmal deutlich schneller ist als der Proportionalanteil. Der Integralanteil des Regelausgangssignals ist im Vergleich langsamer, kann die als Drehzahlabweichung ausgebildete Regelabweichung jedoch asymptotisch ausregeln.

Erfindungsgemäß ist vorgesehen, dass der Regeleinrichtung zur Trennung des Proportionalanteils und/oder des Differenzialanteils des Reglerausgangssignals in das erste Stellsignal und den nicht-ausregelnden Anteil des zweiten Stellsignals eine Frequenzweiche nachgeschaltet ist, wobei das erste Stellsignal eine höhere Dynamik aufweist als der nicht-ausregelnde Anteil des zweiten Stellsignals. Die Frequenzweiche besteht zum Beispiel aus einem Hochpassfilter (Hochpass HP) und einem Tiefpassfilter (Tiefpass TP). Der Hochpassfilter lässt die Signalanteile oberhalb einer Grenzfrequenz passieren und unterdrückt die Signalanteile mit einer niedrigeren Frequenz als der Grenzfrequenz während der Tiefpassfilter die Signalanteile mit einer niedrigeren Frequenz als der Grenzfrequenz passieren lässt und die Signalanteile mit einer höheren Frequenz als der Grenzfrequenz unterdrückt. Die den Hochpassfilter passierenden Signalanteile weisen dann eine höhere Dynamik auf als die den Tiefpassfilter passierenden Signalanteile des Proportionalanteils.

Nach einer Weiterbildung der Erfindung ist eine Abfrageeinrichtung zum Abfragen einer Drehmomentanforderung vorgesehen, die den ausregelnden Anteil bei der Drehmomentanforderung auf seinen momentanen Wert einfriert und den nicht-ausregelnden Anteil auf die Größe des ausregelnden Anteils mit negativen Vorzeichen begrenzt. Durch diese Maßnahme erzeugt die Ansteuervorrichtung bei einer Drehmomentanforderung, wie zum Beispiel einer Betätigung eines Fahrpedals, einen stetigen Übergang von einem drehzahlgeregelten Betrieb der Antriebsmaschinen in einen drehmomentgesteuerten Betrieb des Hybridantriebs. Bei einer Drehmomentanforderung kann der ausregelnde Anteile des zweiten Stellsignals nicht reagieren, da er auf seinen Wert zum Zeitpunkt der Drehmomentanforderung eingefroren ist. Der nicht-ausregelnde Anteil kann den eingefrorenen, ausregelnden Anteil maximal kompensieren, so dass die Regeleinrichtung auf die Drehmomentanforderung bei ausreichend hoher Ist-Drehzahl nicht mit einer Drehzahlkorrektur reagiert. Bei einer Drehmomentanforderung ist die Drehzahlregelung daher ausgeblendet (abgelöst).

Insbesondere ist vorgesehen, dass die Regeleinrichtung auf ein erstes Steuergerät des Elektromotors und ein zweites Steuergerät des Verbrennungsmotors aufgeteilt ist, wobei das erste Stellsignal durch Drehzahlvergleich im ersten Steuergerät und das zweite Stellsignal durch Drehzahlvergleich im zweiten Steuergerät erstellt wird. Moderne Steuergeräte arbeiten nach dem Prinzip der Abtastregelung mit einem zeitsynchronen oder drehwinkelsynchronen Berechnungstakt der Steuerungsalgorithmen. Der Berechnungstakt des ersten Steuergerätes und der des zweiten Steuergerätes sind zumeist nicht aufeinander synchronisiert. Die Kommunikation der Steuergeräte untereinander verläuft über ein Bussystem, so dass es zu einer Zeitverzögerung beim Datenaustausch kommt. Diese Zeitverzögerung wirkt sich negativ auf die Regelqualität aus. Um diesen Nachteil zu umgehen, wird die sich schnell ändernde Ist-Drehzahl im ersten Steuergerät und im zweiten Steuergerät jeweils separat bestimmt und mit der Soll-Drehzahl verglichen. Dazu kann die Ist-Drehzahl jeweils am Elektromotor beziehungsweise am Verbrennungsmotor bestimmt werden.

Weiterhin ist eine Drehmomentsteuerung vorgesehen, die eine der beiden Antriebsmaschinen in Abhängigkeit einer Differenz aus einem Wunschmoment und einem Vorsteuermoment ansteuert. Das Wunschmoment ergibt sich dabei aus der Drehmomentanforderung und der Ist-Drehzahl, das Vorsteuermoment aus einer Ladestrategie eines dem Elektromotor zugewiesenen elektrischen Speichers - wie zum Beispiel einer Batterie - und dem Energiebedarf eines elektrischen Bordnetzes.

Die Erfindung betrifft weiterhin ein Verfahren zur Ansteuerung eines Hybridantriebs gemäß Anspruchs 9, insbesondere eines Hybridantriebs eines Kraftfahrzeugs, mit einem Verbrennungsmotor und mindestens einem Elektromotor als Antriebsmaschinen, deren Drehmomente zu einem Gesamtdrehmoment gekuppelt werden. Es ist vorgesehen, dass zu einer Drehzahlregelung des Hybridantriebs zwei Stellsignale zur Ausgabe an die Antriebsmaschinen bestimmt werden, wobei ein auf den Elektromotor wirkendes erstes Stellsignal gegenüber einem auf den Verbrennungsmotor wirkende zweiten Stellsignal eine höhere Dynamik aufweist. Die Drehzahlregelung teilt die Momentanforderung an die Antriebsmaschine derart auf, dass der Elektromotor kurzfristige Drehmomentanforderung zur Drehzahlregelung aufbringen muss, während der Verbrennungsmotor eine bei dem Drehzahlvergleich ermittelte Drehzahldifferenz als Regeldifferenz langfristig, jedoch genau regelt. Durch dieses Verfahren wird eine Drehzahlregelung mit hoher Regelqualität ermöglicht, wobei das Vorhalten einer schnell abrufbaren Drehmomentreserve am Verbrennungsmotor vermieden oder minimiert wird.

Weiter ist vorgesehen, dass das erste Stellsignal und das zweite Stellsignal aus einem Drehzahlvergleich einer Ist-Drehzahl des Hybridantriebs mit einer Soll-Drehzahl erstellt wird. Bei dem Drehzahlvergleich wird die Drehzahlabweichung durch Bildung einer Drehzahldifferenz der beiden Drehzahlen bestimmt.

Insbesondere ist vorgesehen, dass die Drehzahlregelung bei einer Drehmomentanforderung vollständig von einer Drehmomentsteuerung abgelöst wird. Damit die Drehmomentanforderung von der Drehzahlregelung nicht als Drehmomentabweichung "missinterpretiert" wird und die Drehzahl weiter regelt, wird die Drehzahlregelung bei einer Drehmomentanforderung, wie zum Beispiel bei einem Betätigen eines Fahrpedals, aus der Ansteuerung des Hybridantriebs ausgeblendet (abgelöst).

Schließlich ist vorgesehen, dass das Ablösen der Drehzahlregelung durch eine Abfrage der Drehmomentanforderung erfolgt, die einen ausregelnden Anteil zum Ausregeln der Regelabweichung bei der Drehmomentanforderung auf seinen momentanen Wert einfriert und einen nicht-ausregelnden Anteil auf die Größe des ausregelnden Anteils mit negativen Vorzeichen begrenzt. Durch diese Maßnahme wird der ausregelnde Anteil daran gehindert, die Ist-Drehzahl langfristig auf die Soll-Drehzahl zu regeln. Durch die Begrenzung des nicht-ausregelnden Anteils kann dieser den ausregelenden Anteil lediglich kompensieren und sorgt damit für das Ablösen der Drehzahlregelung.

## Kurze Beschreibung der Zeichnungen

Die Erfindung wird anhand der Figuren näher erläutert und zwar zeigt:

Figur 1                    ein Blockschaltbild einer Simulation eines Hybridantriebs mit einer Ansteuervorrichtung nach einem ersten Ausführungsbeispiel,

Figur 2                    die Sprungantwort einer Simulation des dynamischen Verhaltens eines Verbrennungsmotors,

Figur 3                    die Sprungantwort einer Simulation des dynamischen Verhaltens eines Elektromotors,

Figuren 4a und 4 b    die Reaktion einer Drehzahlregelung auf ein sprunghaft auftretendes Störmoment,

Figuren 5a und 5b    einen Übergang vom drehzahlgeregelten Betrieb in einen momentgesteuerten Betrieb und

Figur 6                    ein Blockschaltbild einer Simulation eines Hybridantriebs mit einer Ansteuervorrichtung, die auf die Steuergeräte des Verbrennungsmotors und des Elektromotors aufgeteilt ist.

## Ausführungsform(en) der Erfindung

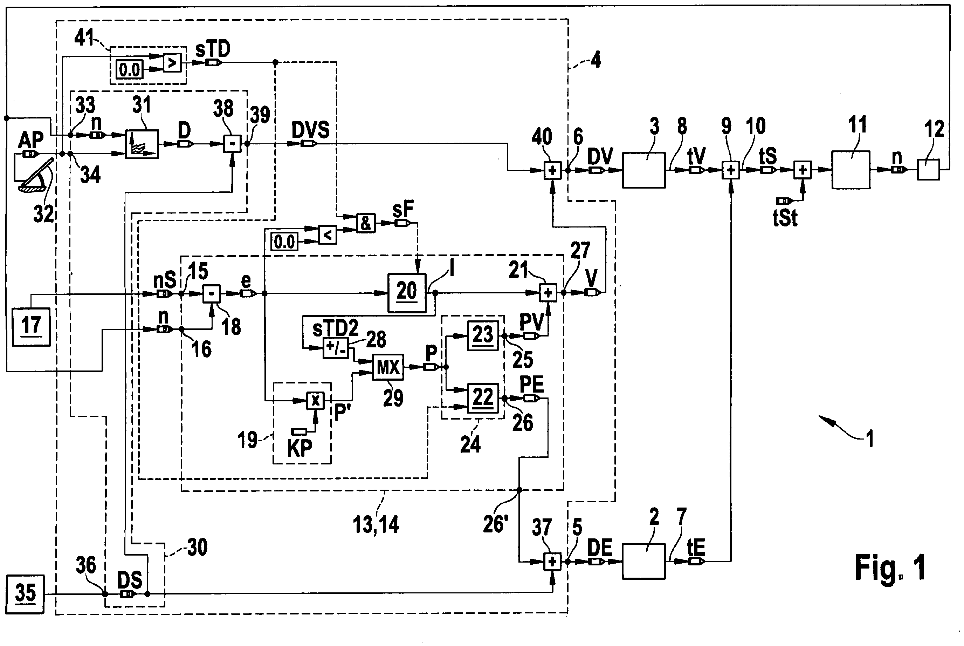

Die Figur 1 zeigt ein Blockschaltbild einer Simulation eines Hybridantriebs 1 mit zwei Antriebsmaschinen, wobei die erste Antriebsmaschine als Elektromotor 2 und die zweite Antriebsmaschine als Verbrennungsmotor 3 ausgebildet ist. Die Antriebsmaschinen 2, 3 werden mit einer Ansteuervorrichtung 4 angesteuert, die über einen Ausgang 5 ein erstes Stellsignal DE an den Elektromotor 2 und über den Ausgang 6 ein zweites Stellsignal DV an den Verbrennungsmotor 3 ausgibt. Die Antriebsmaschinen 2, 3 weisen jeweils eine Abtriebswelle 7, 8 auf, wobei die Abtriebswelle 8 des Verbrennungsmotors 3 und die Abtriebswelle 7 des Elektromotors 2 über ein Getriebe 9 miteinander gekuppelt sind. Dabei addieren sich das Elektromotor-Drehmoment tE und das Verbrennungsmotor-Drehmoment tV zu einem Abtriebsdrehmoment tS des Hybridantriebs 1. An das Getriebe 9 schließt sich eine gemeinsame Abtriebswelle 10 der Antriebsmaschinen 2, 3 des Hybridantriebs 1 an. Die Abtriebswelle 10 ist mit einer mechanischen Antriebseinheit 11 verbunden, die zum Beispiel aus einem Differenzial und den Antriebsrädern eines Kraftfahrzeugs besteht. An der mechanischen Antriebseinheit 11 ergibt sich - zum Beispiel an der Antriebswelle 10 - eine Ist-Drehzahl n, die durch eine Drehzahlerfassungseinrichtung 12 aufgenommen wird. Auf die gemeinsame Abtriebswelle 10 können - zum Beispiel über eine Komponente der Antriebseinheit 11- Störmomente tSt einwirken. Die Ansteuervorrichtung 4 weist eine Regeleinrichtung 13 auf, die als PI-Regeleinrichtung 14 ausgebildet ist. Die Regeleinrichtung 13 besitzt zwei Eingänge 15, 16, wobei der Eingang 15 mit einer Ausgabeeinrichtung 17 zur Ausgabe einer Soll-Drehzahl nS und der Eingang 16 mit der Drehzahlerfassungseinrichtung 12 verbunden ist. Die Eingänge 15, 16 sind in der Regeleinrichtung 13 mit einer Vergleichseinrichtung 18 verbunden, die eine Drehzahldifferenz e zwischen der Soll-Drehzahl nS und der Ist-Drehzahl n ermittelt. Die als PI-Regeleinrichtung 14 ausgebildete Regeleinrichtung 13 weist einen ersten Reglerbereich 19 auf, in dem der Proportionalanteil P' der Regelung bestimmt wird. Dazu wird die Drehzahldifferenz e mit einem Vorfaktor KP vom ersten Reglerbereich multipliziert ausgegeben. Parallel zum ersten Reglerbereich 19 ist ein zweiter Reglerbereich 20 geschaltet, der aus der Drehzahldifferenz e einen Integralanteil I der Drehzahldifferenz e bestimmt. Der Integralanteil I wird verzweigt und im ersten Zweig an eine Additionseinheit 21 der Regeleinrichtung 13 ausgegeben. Im zweiten Zweig wird das Vorzeichen des Integralanteils 1 durch einen Inverter 28 invertiert und der negative Integralanteil -I anschließend von einer Vergleichseinrichtung 29 mit dem Proportionalanteil P' verglichen. Die Vergleichseinheit gibt den höheren Wert (P' oder-1) anschließend als Proportionalanteil P über eine aus einem Hochpassfilter 22 und einem Tiefpassfilter 23 bestehende Frequenzweiche 24 an deren Ausgängen 25, 26 aus. Beim Ausgang 25 des Tiefpassfilters 23 wird ein niederfrequenter Anteil PV des Proportionalanteils P über den Ausgang 26' der Regeleinrichtung 13 ausgegeben und am Ausgang 26 des Hochpassfilters 22 wird ein hochfrequenter Anteil PE des Proportionalanteils P ausgegeben. Der niederfrequente Anteil des Proportionalanteils P und der Integralanteil I werden in der Additionseinheit 21 aufaddiert und über den Ausgang 27 der Regeleinrichtung 13 als zweites Ausgangssignal V ausgegeben. Dabei bestimmt der niederfrequente Anteil PV des Proportionalanteils P den nicht ausregelnden Anteil des zweiten Stellsignals DV, der Integralanteil I den ausregelnden Anteil des zweiten Stellsignals DV und der hochfrequente Anteil PE des Proportionalanteils P das erste Stellsignal DE.

Neben der Regeleinrichtung 13 weist die Ansteuereinrichtung 4 auch eine Drehmomentsteuerung 30 auf, die mit einer Drehmomentbestimmungseinheit 31 aus einer Stellung AP des Fahrpedals 32 und der Ist-Drehzahl n der Drehzahlerfassungseinrichtung 12 ein Fahrerwunschmoment-Signal D bestimmt. Dabei ist die Drehmomentbestimmungseinheit 31 über einen Eingang 33 mit der Drehzahlerfassungsvorrichtung 12 und über einen Eingang 34 mit dem Fahrpedal 32 verbunden. Eine Ausgabeeinrichtung 35 gibt über den Eingang 36 in Abhängigkeit von einer Ladestrategie ein Vorsteuermoment-Signal DS aus, das zusammen mit dem hochfrequenten Anteil PE des Proportionalanteils P der Regeleinrichtung 13 über eine Additionseinheit 37 auf den Ausgang 5 der Ansteuereinrichtung 4 gegeben wird. Eine Subtraktionseinrichtung 38 vergleicht das Fahrerwunschmoment-Signal D mit dem Vorsteuermoment-Signal DS und gibt am Ausgang 39 ein Differenzdrehmoment-Signal DVS mit DVS = D - DS aus. Dieses Differenzdrehmoment-Signal DVS wird in einer Additionseinheit 40 der Ansteuereinrichtung 4 mit dem Ausgangssignal V der Regeleinrichtung 13 addiert und über den Ausgang 6 der Ansteuereinrichtung 4 als zweites Stellsignal DV an den Verbrennungsmotor 3 ausgegeben. Eine Abfrageeinrichtung 41 fragt die Stellung AP des Fahrpedals 32 ab und gibt bei Betätigung des Fahrpedals 32 durch den Fahrer ein Steuersignal sTD weiter. Ist gleichzeitig die Regeldifferenz e negativ und liegt die Ist-Drehzahl n damit oberhalb der Solldrehzahl nS, wird ein Steuersignal sF zum Einfrieren des Integralanteils I an den zweiten Reglerbereich 20 weitergegeben. Das Element 29 gibt den größeren Wert des Proportionalanteils P' und des vom Invertierer 28 mit negiertem Vorzeichen versehenen Integralanteils I weiter und sorgt somit für eine Beschränkung des Proportionalanteils P.

Bei der Simulation des Hybridantriebs 1 sind die Signale DE, DV, P, I, PV, PE, V, DS, D und DVS der Ansteuervorrichtung als äquivalente Drehmomente tDE, tDV, tP, tl, tPV, tPE, tV, tDS, tD und tDVS berücksichtigt. Im Folgenden werden diese Größen als entsprechende Drehmomente beschrieben.

Es ergibt sich folgende Funktion der Ansteuereinrichtung 4: Die gemeinsame Ist-Drehzahl n von Verbrennungsmotor 3 und Elektromotor 2 wird mit einer PI-Regeleinrichtung 14 geregelt. Dieser ermittelt aus der Soll-Drehzahl nS und der Ist-Drehzahl n die Regeldifferenz e. Eine Ladestrategie gibt abhängig vom Energiebedarf eines elektrischen Bordnetzes ein Vorsteuermoment tDS für den Elektromotor 2 vor, wobei das Vorsteuermoment tDS mit umgekehrten Vorzeichen zum Fahrerwunschmoment tD addiert wird, um die Last des Elektromotors 2 zu kompensieren. Aus der Stellung des Fahrpedals 32 und der Ist-Drehzahl n wird ein Fahrerwunschmoment tD für das Abtriebsdrehmoment tS ermittelt. Bei nicht getretenem Fahrpedal 32 ist tD negativ, sodass sich im Leerlauf ein positiver Integralanteil tl einstellt, der das negative Fahrerwunschmoment tD kompensiert. Daneben gleicht der auf dem Verbrennungsmotor 2 wirkende Integralanteil tl Ungenauigkeiten und Störungen quasi stationär aus, wodurch der Proportionalanteil tP mittelwertfrei wird. Im zeitlichen Mittel entspricht das Soll-Drehmoment tDE des Elektromotors 2 dem Vorsteuermoment tDS, sodass der Energiebedarf des elektrischen Bordnetzes erfüllt wird.

Zur Simulation der Funktion der Ansteuervorrichtung 4 wird auch das dynamische Verhalten des Verbrennungsmotors 3 simuliert. Das Übertragungsverhalten vom Verbrennungsmotor-Sollmoment tDV auf das Verbrennungsmotordrehmoment tV ist durch eine Reihenschaltung eines Totzeitgliedes mit einer Totzeit von 80 ms und eines PT1-Gliedes mit einer Zeitkonstante von 200 ms näherungsweise nachgebildet. Im Ausführungsbeispiel erfolgt aus Wirkungsgradgründen keine Spätverstellung des Zündwinkels, das Übertragungsverhalten ist durch die Dynamik der Ansteuerung der Luftzufuhr vorgegeben. Das Übertragungsverhalten vom Elektromotor-Soll-Moment tDE auf das Elektomotordrehmoment tE wird durch ein PT1-Glied mit einer Zeitkonstante von 30 ms näherungsweise modelliert.

Der Proportionalanteil tP wird über die Frequenzweiche 24 auf den Verbrennungsmotor 3 und den Elektromotor 2 aufgeteilt. Vorzugsweise werden die Übertragungsfunktionen (LAPLACE-Transformation mit LAPLACE-Variable s) des Tiefpassfilters 23

$$G_{TP}(s) = \frac{tPV(s)}{tP(s)} \qquad (1)$$

und des Hochpassfilters 22

$$G_{HP}(s) = \frac{tPE(s)}{tP(s)} \qquad (2)$$

so gewählt, dass für die gesamte Übertragungsfunktion Gg(s) näherungsweise gilt:

$$G_g(s) = G_{TP}(s) \cdot G_V + G_{HP}(s) \cdot G_E(s) \approx 1 \qquad (3)$$

Dabei kennzeichnen

$$G_V(s) = \frac{tV(s)}{tDV(s)} \qquad (4)$$

die Übertragungsfunktion für die Momentenansteuerung des Verbrennungsmotors 3 (Dynamik der Luftzufuhr) und

$$G_E(s) = \frac{tE(s)}{tDE(s)} \qquad (5)$$

die Übertragungsfunktion für die Momentenansteuerung des Elektromotors 2. Der Proportionalanteil tP wird dynamisch auf den Elektromotor 2 und den Verbrennungsmotor 3 aufgeteilt, wobei der Verbrennungsmotor durch die Dynamik der Luftzufuhr (Saugrohrdynamik) und den Tiefpassfilter 23 verzögert reagiert. Der Hochpassfilter 22 und die schnelle Ansprechzeit des Elektromotors 2 gleichen die verzögerte Wirkung des Verbrennungsmotors 3 aus. Das erste Stellsignal DE sorgt dafür, dass der Elektromotor 2 sofort auf Störungen reagiert und damit eine hohe Regelqualität ermöglicht. Der Proportionalanteil der Regeleinrichtung 13 wird mit Hilfe eines Verstärkungsfaktors KP bestimmt.

Der Tiefpassfilter 23 wird benutzt, um Bewegungen einer Drosselklappe, die das Stellglied für die Luftzufuhr bildet, zu dämpfen und/oder die Dynamik in der Luftzufuhr des Verbrennungsmotors 3 zu reduzieren, was eventuell ein verbessertes Emissionsverhalten ermöglicht. Die Übertragungsfunktion (4) für die Momentenansteuerung des Verbrennungsmotors hängt stark vom Betriebspunkt ab, somit ist von Vorteil, die Übertragungsfunktionen (1), (2) des Tiefpassfilters 23 und/oder des Hochpassfilters 22 an den aktuellen Betriebspunkt (Drehzahl, Last ...) anzupassen.

Bei einer Betätigung des Fahrpedals 32 durch einen Fahrer beziehungsweise einer sonstigen Drehmomentanforderung AP und bei einer negativen Regelabweichung e, bei der die Ist-Drehzahl n über der Soll-Drehzahl nS liegt, wird der Integralanteil tl eingefroren. Das Fahrer-Wunschmoment tD erhöht sich entsprechend der Betätigung des Fahrpedals. Aufgrund des erhöhten Fahrer-Wunschmomentes tD steigt die Drehzahl n an, wobei sich in Folge ein fallender, negativer Proportionalanteil tP ergibt. Der niederfrequente Anteil tPV des Proportionalanteils P wird ebenfalls negativ und kompensiert bei zunehmender Erhöhung der Ist-Drehzahl n gegenüber der Soll-Drehzahl nS den eingefrorenen Integralanteil tl. Der Proportionalanteil tP ist auf den mit -1 multiplizierten Integralanteil begrenzt, wodurch eine Überkompensation vermieden wird. Liegt die Ist-Drehzahl n um eine gewisse Differenz über der Soll-Drehzahl nS, so ist die Drehzahlregelung der Regeleinrichtung 13 vollständig abgelöst, sodass sich ein momentengesteuerter Betrieb durch die Drehmomentensteuerung 30 ergibt. Bei eingeschwungenem Tiefpassfilter 23 gilt dass tPV = tP = -tl und somit für das zweite Stellmoment tV der Regeleinrichtung 13: tV = 0. Der Eingang tP des Hochpassfilters 22 nimmt dabei den konstanten Wert von -tl an, bei eingeschwungenem Hochpassfilter 22 gilt dann für das erste Stellmoment tPE der Regeleinrichtung 13: tPE = 0.

Bei einer Beendigung der Betätigung des Fahrpedals 32 wird der zuvor eingefrorene Integralanteil tl wieder freigegeben und nimmt ab. Eine Begrenzung des I-Anteils verhindert ein zu starkes Abnehmen und einen zu starken "DrehzaNunterschwinger" beim Eintritt in die nächste drehzahlgeregelte Phase. Ein freigegebener Integralanteil wirkt sich bei hoher Ist-Drehzahl n auf den Proportionalanteil tP wegen dessen Limitierung auf -tl aus. Es entsteht eine unerwünschte Beeinflussung des Soll-Moments tDE des Elektromotors 2 durch die differenzierende Wirkung des Hochpassfilters 22, die zum Beispiel durch eine drehzahlabhängige Parametrierung des Hochpassfilters 22 vermieden werden kann.

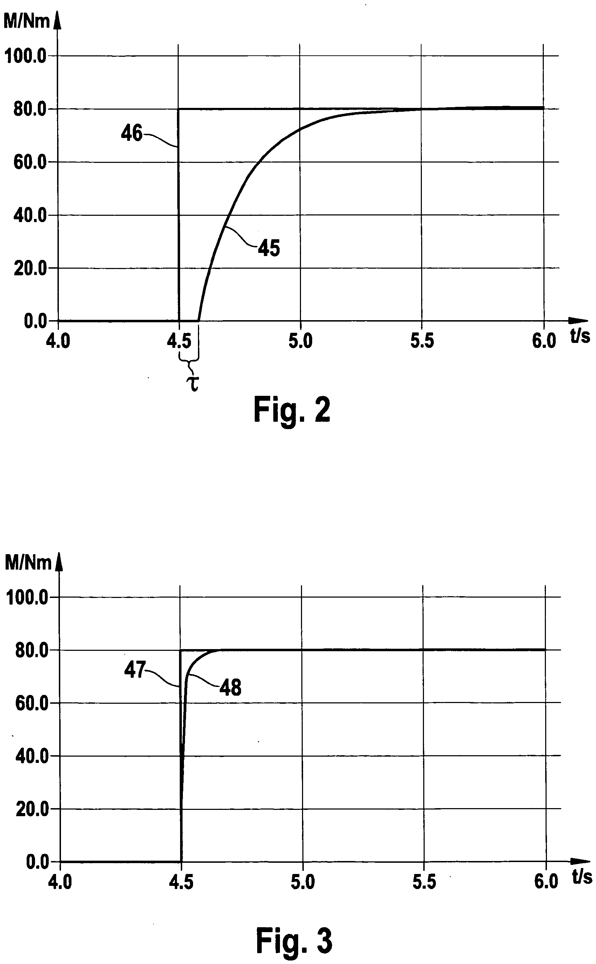

Die Figur 2 zeigt ein Diagramm zur Charakterisierung des Verbrennungsmotors 3, bei dem das Verbrennungsmotor-Soll-Moment tDV und das Verbrennungsmotor-Drehmoment tV über der Zeit t aufgetragen ist. Dabei erfolgt ein Sprung des Verbrennungsmotor-Soll-Moments tDV zum Zeitpunkt t = 4.5 s. Mit dem simulierten Übertragungsverhalten reagiert der Verbrennungsmotor 3 mit einem verzögerten Anstieg des Verbrennungsmotor-Drehmoments tV. Die Funktion 45 (tV) zeigt daher gegenüber der Funktion 46 (tDV) eine kurze Totzeit und ein anschließendes, für ein PT1-Glied typisches Ansteigen auf einen Maximalwert.

Die Figur 3 zeigt das Übertragungsverhalten des Elektromotors 2 als Sprungantwort des Elektromotor-Drehmoments tE auf einen Sprung des Elektromotor-Soll-Moments tDE. Auf den Sprung des Elektromotor-Soll-Moments tDE (Funktion 47) bei t = 4.5 s folgt das Elektromotor-Ist-Moment tE ohne Totzeit, wobei die Funktion 48 (tE) eine typische Anstiegscharakteristik eines PT1-Gliedes zeigt.

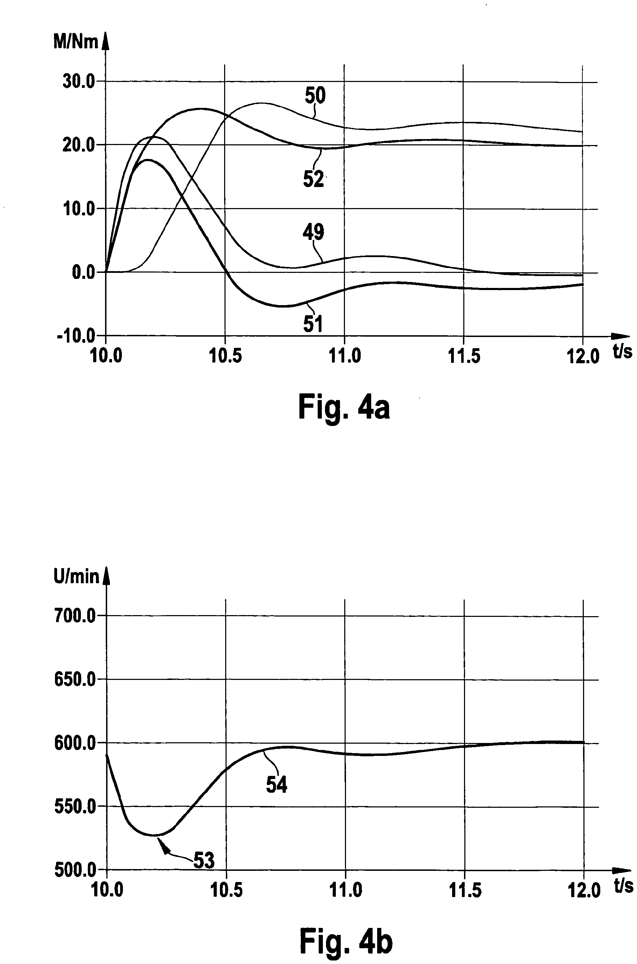

Die Figur 4a zeigt ein Diagramm, bei dem die Funktionen des Proportionalanteils tP, des Verbrennungsmotor-Drehmoment tV, des Elektromotor-Drehmoments tE und des Gesamtmoment tS dargestellt sind, wobei auf der Abszisse die Zeit in Sekunden (s) und der Ordinate die Drehmomente in Newtonmeter (Nm) abgetragen sind. Die Figur 4b zeigt ein Diagramm, das die Funktion der Ist-Drehzahl n in Abhängigkeit von der Zeit darstellt, wobei auf der Abszisse die Zeit in Sekunden und auf der Ordinate die Drehzahl in U/min (Umdrehungen pro Minute) abgetragen ist.

Die Figuren 4a und 4b zeigen die Reaktion der Drehzahlregelung der Regeleinrichtung 13 auf einen Sprung des Störmomentes tSt von 0 Nm auf - 20 Nm zum Zeitpunkt t = 10 s. Dabei beträgt die Soll-Drehzahl nS = 600 U/min. Das Fahrpedal 32 ist nicht betätigt. Der Proportionalanteil tP (Funktion 49) reagiert sofort auf die Abweichung der Ist-Drehzahl n (Funktion 54) von der Soll-Drehzahl nS. Das Verbrennungsmotor-Drehmoment tV (Funktion 50) reagiert aufgrund des Tiefpassfilters 23 und der Dynamik des Luftpfades des Verbrennungsmotors 3 nur verzögert. Das Elektromotor-Drehmoment tE (Funktion 51) gleicht durch die Wirkung des Hochpassfilters 22 den verzögerten Momentaufbau am Verbrennungsmotor 3 aus. Ein Vergleich des Abtriebsdrehmomentes tS (Funktion 52) mit dem Proportionalanteil tP (Funktion 49) zeigt, dass der Verbrennungsmotor 3 und der Elektromotor 2 den Proportionalanteil tP gemeinsam nahezu umsetzen, wobei größere Abweichungen ab t = 10.25 s entstehen. Diese Abweichungen sind bedingt durch den zusätzlich auf das Abtriebsdrehmoment tS wirkenden Integralanteil tI.

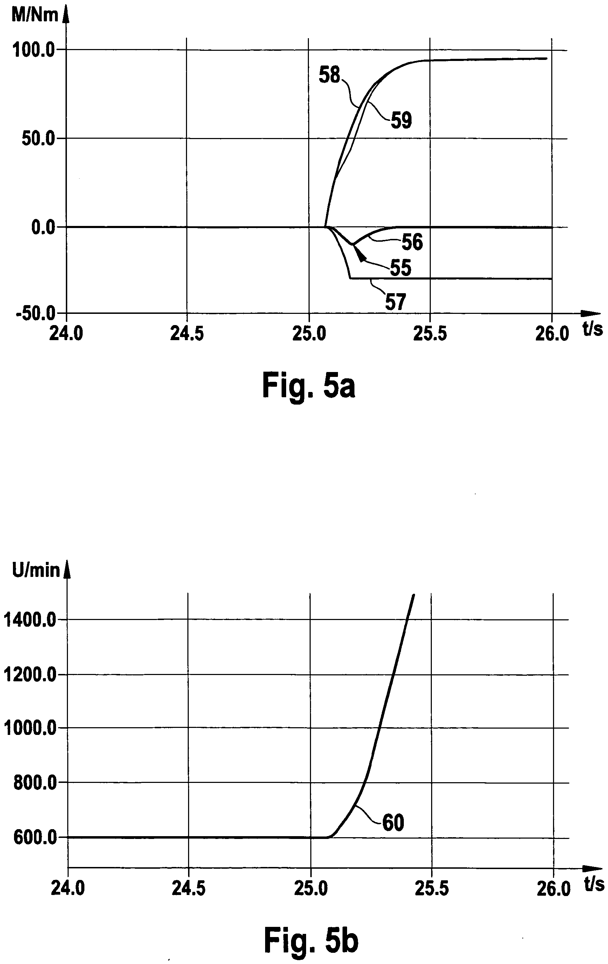

Die Figur 5a zeigt ein Diagramm, bei dem die Funktionen des Proportionalanteils tP, das Verbrennungsmotor-Drehmoment tV, das Elektromotor-Ist-Moment tE und das Gesamtmoment tS dargestellt sind, wobei auf der Abszisse die Zeit und der Ordinate die Drehmomente abgetragen sind. Die Figur 5b zeigt ein Diagramm, das die Funktion der Ist-Drehzahl n darstellt, wobei auf der Abszisse die Zeit in Sekunden und auf der Ordinate die Drehzahl in U/min (Umdrehungen pro Minute) abgetragen ist.

Die Figuren 5a und 5b zeigen beispielhaft einen Übergang eines drehzahlgeregelten Betriebs in einen drehmomentgesteuerten Betrieb bei Betätigung des Fahrpedals 32 durch Ablösen der Regeleinrichtung 13. Der Unterschwinger 55 im Verlauf der Funktion 56 des Elektromotor-Drehmoments tE ergibt sich aus dem fallenden Bereich der Funktion 57 des Proportionalanteils tP. Um den Unterschwinger 55 zu begrenzen, werden Parameter des Hochpassfilters 22 abhängig von der Stellung des Fahrpedals 32 beziehungsweise der Ausgangsgröße der Abfrageeinrichtung 41 umgeschaltet. Die Funktion 58 zeigt das typische Anstiegsverhalten des Verbrennungsmotordrehmoments tV bei Erhöhung des Fahrerwunschmoments tD. Das Abtriebsdrehmoment tS (Funktion 59) zeigt demgegenüber eine kurze Verzögerung, die vom Unterschwinger 55 herrührt. Die Funktion 60 der Figur 5b zeigt den resultierenden Anstieg der Ist-Drehzahl n.

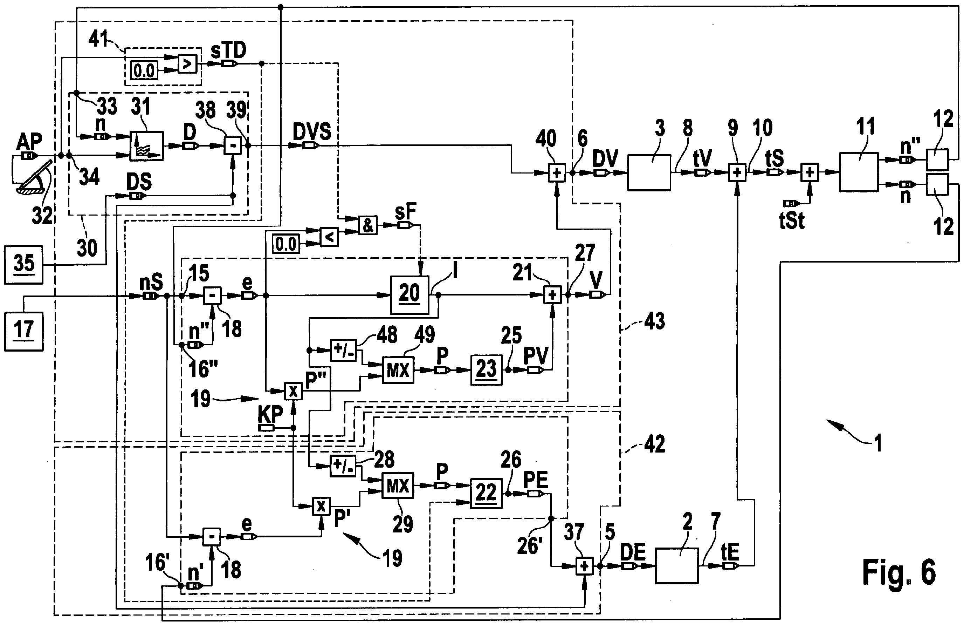

Moderne Steuerungen arbeiten nach dem Prinzip der Abtastregelung mit einem zeitsynchronen oder drehwinkelsynchronen Berechnungstakt der Steueralgorithmen. Die Berechnungstakte von verschiedenen Steuergeräten sind meist nicht aufeinander synchronisiert und die Steuergeräte kommunizieren über ein Bussystem miteinander. Beides führt zu Zeitverzögerungen beim Datenaustausch. Zeitverzögerungen beziehungsweise Totzeiten reduzieren bei gleichbleibender Stabilitätsreserve die bei der Drehzahlregelung mögliche Verstärkung. Beim Schließen eines Regelkreises über ein Bussystem ist die Regelqualität somit begrenzt. Die Figur 6 zeigt ein modifiziertes Ausführungsbeispiel der Ansteuervorrichtung 4 des Hybridantriebs 1, die diesen Nachteil umgeht.

Die Figur 6 entspricht im Wesentlichen der Figur 1, sodass hier nur auf die Unterschiede eingegangen wird. Dabei ist die Regeleinrichtung auf ein erstes Steuergerät 42 des Elektromotors 2 und ein zweites Steuergerät 43 des Verbrennungsmotors 3 so aufgeteilt, dass das erste Stellsignal durch Drehzahlvergleich einer Vergleichseinrichtung 18 im ersten Steuergerät 42 und das zweite Stellsignal durch Drehzahlvergleich einer Vergleichseinrichtung 18 im zweiten Steuergerät 43 erstellt wird. Dazu wird die Ist-Drehzahl n im ersten Steuergerät 42 durch die Drehzahl n' des Elektromotors 2 bestimmt und im zweiten Steuergerät 43 durch die Drehzahl n" des Verbrennungsmotors 3. Im Rahmen der Messungenauigkeit sind diese Größen n, n', n" gleich groß. Damit sind auch die beiden Proportionalanteile tP' und tP" in beiden Steuergeräten 42, 43 näherungsweise gleich groß. Beide Proportionalanteile sind auf den negativen Wert des Integralanteils tI (auf -tI) begrenzt, was den oben beschriebenen Mechanismus zum Übergang vom drehzahlgeregelten Betrieb in den drehmomentgesteuerten Betrieb auch bei der Aufteilung der Regeleinrichtung 13 auf das erste Steuergerät 42 und das zweite Steuergerät 43 ermöglicht. Dabei entsprechen der Inverter 48 und die Vergleichseinrichtung 49 des Steuergerätes 43 dem Inverter 28 und der Vergleichseinrichtung 29 des Steuergerätes 42. Über ein Bussystem werden die weniger zeitkritischen Größen wie das Vorsteuermoment tDS für den Elektromotor 2, die Soll-Drehzahl nS, der Verstärkungsfaktor KP, der Integralanteil tl, die Abfragegröße sTD sowie optional weitere Parameter übermittelt. Die eigentlichen Regelschleifen (Rückführungen der Drehzahlen n' und n") sind nicht über das Bussystem geschlossen, wodurch Totzeiten vermieden werden. Dies ermöglicht eine hohe Regelqualität.

**Patentansprüche**

1. Ansteuervorrichtung eines Hybridantriebs, insbesondere eines Hybridantriebs eines Kraftfahrzeugs, mit mindestens einem Verbrennungsmotor und mindestens einem Elektromotor als Antriebsmaschinen, deren Drehmomente zu einem Gesamtdrehmoment gekuppelt werden, und mit einer Regeleinrichtung, die zur Drehzahlregelung für die Antriebsmaschinen (2,3) je ein Stellsignal (DV,DE) erstellt, wobei ein auf den Elektromotor (2) wirkendes erstes Stellsignal (DE) gegenüber einem auf den Verbrennungsmotor (3) wirkenden zweiten Stellsignal (DV) eine höhere Dynamik aufweist, **dadurch gekennzeichnet, dass** der Regeleinrichtung (13) zur Trennung eines Proportionalanteils (P) und/oder eines Differenzialanteils eines Reglerausgangssignals in das erste Stellsignal (DE) und einen nicht-ausregelnden Anteil (PV) des zweiten Stellsignals (DV) eine Frequenzweiche (24) nachgeschaltet ist, wobei das erste Stellsignal (DE) eine höhere Dynamik aufweist als der nicht-ausregelnde Anteil (PV) des zweiten Stellsignals (DV).

2. Ansteuervorrichtung nach Anspruch 1, **dadurch gekennzeichnet, dass** die Regeleinrichtung (13) das erste Stellsignal (DE) und das zweite Stellsignal (DV) aus einem Drehzahlvergleich einer Ist-Drehzahl (n) des Hybridantriebs (1) mit einer Soll-Drehzahl (nS) erstellt.

3. Ansteuervorrichtung nach einem der vorhergehenden Ansprüche, **dadurch gekennzeichnet, dass** das erste Stellsignal (DE) nicht ausregelnd ist und das zweite Stellsignal (DV) aus einem ausregelnden Anteil und dem nicht-ausregelnden Anteil besteht.

4. Ansteuervorrichtung nach einem der vorhergehenden Ansprüche, **dadurch gekennzeichnet, dass** die Regeleinrichtung (13) eine PI-Regeleinrichtung (14) und/oder eine PID-Regeleinrichtung ist.

5. Ansteuervorrichtung nach einem der vorhergehenden Ansprüche, **dadurch gekennzeichnet, dass** ein Integralanteil (I) eines Reglerausgangssignals ausregelnd und ein Proportionalanteil (P) des Reglerausgangssignals und/oder ein Differenzialanteil des Reglerausgangssignals nicht-ausregelnd ist/sind.

6. Ansteuervorrichtung nach einem der vorhergehenden Ansprüche, **gekennzeichnet durch** eine Abfrageeinrichtung (40) zum Abfragen einer Drehmomentanforderung (AP), die den ausregelnden Anteil bei der Drehmomentanforderung auf seinem momentanen Wert einfriert und den nicht-ausregelnden Anteil auf die Größe des ausregelnden Anteils mit negativen Vorzeichen begrenzt.

7. Ansteuervorrichtung nach einem der vorhergehenden Ansprüche, **dadurch gekennzeichnet, dass** die Regeleinrichtung (13) auf ein erstes Steuergerät (44) des Elektromotors (2) und ein zweites Steuergerät (45) des Verbrennungsmotors (3) aufgeteilt ist, wobei das erste Stellsignal (DE) durch Drehzahlvergleich im ersten Steuergerät (44) und das zweite Stellsignal (DV) durch Drehzahlvergleich im zweiten Steuergerät (45) erstellt wird.

8. Ansteuervorrichtung nach einem der vorhergehenden Ansprüche, **gekennzeichnet durch** eine Drehmomentsteuerung (30), die eine der beiden Antriebsmaschinen (2,3) in Abhängigkeit einer Differenz aus einem Wunschmoment (tD) und einem Vorsteuermoment (tDS) ansteuert.

9. Verfahren zur Ansteuerung eines Hybridantriebs, insbesondere eines Hybridantriebs eines Kraftfahrzeugs, mit einem Verbrennungsmotor und mindestens einem Elektromotor als Antriebsmaschinen, deren Drehmomente zu einem Drehmoment gekuppelt werden, wobei zu einer Drehzahlregelung des Hybridantriebs zwei Stellsignale zur Ausgabe an die Antriebsmaschinen bestimmt werden, und ein auf den Elektromotor wirkendes erstes Stellsignal gegenüber einem auf den Verbrennungsmotor wirkenden zweiten Stellsignal eine höhere Dynamik aufweist, und wobei zur Drehzahlregelung eine Regeleinrichtung vorgesehen ist, **dadurch gekennzeichnet, dass** der Regeleinrichtung (13) zur Trennung eines Proportionalanteils (P) und/oder eines Differenzialanteils eines Reglerausgangssignals in das erste Stellsignal (DE) und einen nicht-ausregelnden Anteil (PV) des zweiten Stellsignals (DV) eine Frequenzweiche (24) nachgeschaltet ist, wobei das erste Stellsignal (DE) eine höhere Dynamik aufweist als der nicht-ausregelnde Anteil (PV) des zweiten Stellsignals (DV).

**10.** Verfahren nach Anspruch 9, **dadurch gekennzeichnet, dass** das erste Stellsignal und das zweite Stellsignal aus einem Drehzahlvergleich einer Ist-Drehzahl des Hybridantriebs mit einer Soll-Drehzahl erstellt wird.

**11.** Verfahren nach einem der vorhergehenden Ansprüche, **dadurch gekennzeichnet, dass** die Drehzahlregelung bei einer Drehmomentanforderung vollständig von einer Drehmomentsteuerung abgelöst wird.

**12.** Verfahren nach einem der vorhergehenden Ansprüche, **dadurch gekennzeichnet, dass** das Ablösen der Drehzahlregelung durch eine Abfrage der Drehmomentanforderung erfolgt, die einen ausregelnden Anteil zum Ausregeln der Regelabweichung bei der Drehmomentanforderung auf seinen momentanen Wert einfriert und einen nicht-ausregelnden Anteil auf die Größe des ausregelnden Anteils mit negativen Vorzeichen begrenzt.

**Claims**

**1.** Control apparatus for a hybrid drive, in particular a hybrid drive of a motor vehicle, having at least one internal combustion engine and at least one electric motor as drive machines, the torques of which are combined to form a composite torque, and having a closed-loop control device which produces a respective actuation signal (DV, DE) for the drive machines (2, 3) for the purpose of closed-loop control of the rotational speed, wherein a first actuation signal (DE) which acts on the electric motor (2) has higher dynamics than a second actuation signal (DV) which acts on the internal combustion engine (3), **characterized in that** a frequency filter (24) is connected downstream of the closed-loop control device (13) in order to separate a proportional component (P) and/or a differential component of a closed-loop controller output signal into the first actuation signal (DE) and into a non-compensating component (PV) of the second actuation signal (DV), wherein the first actuation signal (DE) has higher dynamics than the non-compensating component (PV) of the second actuation signal (DV).

**2.** Control apparatus according to Claim 1, **characterized in that** the closed-loop control device (13) produces the first actuation signal (DE) and the second actuation signal (DV) from a rotational speed comparison of an actual rotational speed (n) of the hybrid drive (1) with a setpoint rotational speed (nS).

**3.** Control apparatus according to one of the preceding claims, **characterized in that** the first actuation signal (DE) is a non-compensating signal, and the second actuation signal (DV) is composed of a compensating component and the non-compensating component.

**4.** Control apparatus according to one of the preceding claims, **characterized, in that** the closed-loop control device (13) is a PI controller (14) and/or PID controller.

**5.** Control apparatus according to one of the preceding claims, **characterized in that** an integral component (I) of a closed-loop controller output signal is a compensating component and a proportional component (P) of the closed-loop controller output signal and/or a differential component of the closed-loop controller output signal is/are (a) non-compensating component/components.

**6.** Control apparatus according to one of the preceding claims, **characterized by** an interrogation device (40) for interrogating a torque request (AP) which freezes the compensating component at its instantaneous value when the torque request occurs, and limits the non-compensating component to the size of the compensating component with a negative sign.

**7.** Control apparatus according to one of the preceding claims, **characterized in that** the closed-loop control device (13) is apportioned between a first control unit (44) of the electric motor (2) and a second control unit (45) of the internal combustion engine (3), wherein the first actuation signal (DE) is produced by rotational speed comparison in the first control unit (44), and the second actuation signal (DV) is produced by rotational speed comparison in the second control unit (45).

**8.** Control apparatus according to one of the preceding claims, **characterized by** a torque controller (30) which controls one of the two drive machines (2, 3) as function of a difference between a desired torque (tD) and a pilot control torque (tDS).

**9.** Method for controlling a hybrid drive, in particular a hybrid drive of a motor vehicle, having an internal combustion engine and at least one electric motor as drive machines whose torques are combined to form one torque, wherein for the purpose of closed-loop control of the rotational speed of the hybrid drive, two actuation signals are determined for outputting to the drive machines and a first actuation signal which acts on the electric motor has higher dynamics than a second actuation signal which acts on the internal combustion engine, and wherein, for the purpose of closed-loop control of the rotational speed, a closed-loop control device is provided, **characterized in that** a frequency filter (24) is connected downstream of the closed-loop control device (13) in order to separate a proportional component (P) and/or a differential component of a closed-loop controller output signal into the first actuation signal (DE) and into a non-compensating component (PV) of the second actuation signal (DV), wherein the first actuation signal (DE) has higher dynamics than the non-compensating component (PV) of the second actuation signal (DV).

**10.** Method according to Claim 9, **characterized in that** the first actuation signal and the second actuation signal are produced from a rotational speed comparison of an actual rotational speed of the hybrid drive with a setpoint rotational speed.

**11.** Method according to one of the preceding claims, **characterized in that** the closed-loop control of the rotational speed in the case of a torque request is triggered completely by a torque controller.

**12.** Method according to one of the preceding claims, **characterized in that** the triggering of the closed-loop control of the rotational speed is carried out by interrogation of the torque request, which request freezes a compensating component for compensating for the control error at its instantaneous value when the torque request occurs, and limits a non-compensating component to the value of the compensating component with a negative sign.

## Revendications

**1.** Dispositif de commande d'un groupe propulseur hybride, notamment d'un groupe propulseur hybride d'un véhicule automobile, avec au moins un moteur à combustion interne et au moins un moteur électrique comme moteurs de groupe propulseur, dont les couples de rotation sont couplés pour former un couple de rotation total et avec un dispositif de régulation émettant respectivement, pour la régulation de la vitesse de rotation des moteurs de groupe propulseur (2, 3), un signal de commande (DV, DE), un premier signal de commande (DE) agissant sur le moteur électrique (2) présentant un dynamisme plus important que le deuxième signal de commande (DV) agissant sur le moteur à combustion interne (3), **caractérisé en ce qu'**un filtre (24) est connecté en aval du dispositif de régulation (13) en vue de séparer une part proportionnelle (P) et/ou une part différentielle d'un signal de sortie de régulateur dans le premier signal de commande (DE) et une part non régulante (PV) du deuxième signal de commande (DV), le premier signal de commande (DE) présentant un dynamisme supérieur à la part (PV) non régulante du deuxième signal de commande (DV).

**2.** Dispositif de commande selon la revendication 1, **caractérisé en ce que** le dispositif de régulation (13) émet le premier signal de commande (DE) et le deuxième signal de commande (DV) à partir d'une comparaison des vitesses de rotation comparant une vitesse de rotation réelle (n) du groupe propulseur hybride (1) à une vitesse de rotation théorique (nS).

**3.** Dispositif de commande selon l'une quelconque des revendications précédentes, **caractérisé en ce que** le premier signal de commande (DE) est non régulant et que le deuxième signal de commande (DV) se compose d'une part régulante et d'une part non régulante.

**4.** Dispositif de commande selon l'une quelconque des revendications précédentes, **caractérisé en ce que** le dispositif de régulation (13) est un dispositif de régulation PI (14) et/ou un dispositif de régulation PID.

**5.** Dispositif de commande selon l'une quelconque des revendications précédentes, **caractérisé en ce qu'**une part intégrale (I) d'un signal de sortie de régulateur est régulante et qu'une part proportionnelle (P) du signal de sortie de régulateur et/ou une part différentielle du signal de sortie de régulateur est/sont non régulante(s).

**6.** Dispositif de commande selon l'une quelconque des revendications précédentes, **caractérisé par** la présence d'un dispositif d'interrogation (40) servant à extraire une demande de couple de rotation (AP) gelant la part régulante lors de la demande de couple de rotation à sa valeur momentanée et limitant la part non régulante à la taille de la part régulante avec un signe négatif.

**7.** Dispositif de commande selon l'une quelconque des revendications précédentes, **caractérisé en ce que** le dispositif de régulation (13) est divisé en un premier appareil de commande (44) du moteur électrique (2) et un deuxième appareil de commande (45) du moteur à combustion interne (3), le premier signal de commande (DE) étant émis par comparaison des vitesses de rotation dans le premier appareil de commande (44) et le deuxième signal de commande (DV) étant émis par comparaison des vitesses de rotation dans le deuxième appareil de commande (45).

8. Dispositif de commande selon l'une quelconque des revendications précédentes, **caractérisé par** une commande de couple de rotation (30) commandant un des deux moteurs de groupe propulseur (2, 3) en fonction d'une différence observée entre un couple souhaité (tD) et un couple de précommande (tDS).

9. Procédé de commande d'un groupe propulseur hybride, notamment d'un groupe propulseur hybride d'un véhicule automobile, avec un moteur à combustion interne et au moins un moteur électrique comme moteurs de groupe propulseur, dont les couples de rotation sont couplés pour former un couple de rotation, deux signaux de commande étant définis pour être envoyés aux moteurs de groupe propulseur afin d'obtenir une régulation de la vitesse de rotation du groupe propulseur hybride et un premier signal de commande agissant sur le moteur électrique présentant un dynamisme plus important que le deuxième signal de commande agissant sur le moteur à combustion interne et un dispositif de régulation étant prévu pour réguler la vitesse de rotation, **caractérisé en ce qu'**un filtre (24) est connecté en aval du dispositif de régulation (13) en vue de séparer une part proportionnelle (P) et/ou une part différentielle d'un signal de sortie de régulateur dans le premier signal de commande (DE) et une part non régulante (PV) du deuxième signal de commande (DV), le premier signal de commande (DE) présentant un dynamisme plus important que la part non régulante (PV) du deuxième signal de commandes (DV) .

10. Procédé selon la revendication 9, **caractérisé en ce que** le premier signal de commande et le deuxième signal de commande sont émis à partir d'une comparaison des vitesses de rotation comparant une vitesse de rotation réelle du groupe propulseur hybride à une vitesse de rotation théorique.

11. Procédé selon l'une quelconque des revendications précédentes, **caractérisé en ce que** la régulation de la vitesse de rotation est entièrement remplacée par une commande de couple de rotation en présence d'une demande de couple de rotation.

12. Procédé selon l'une quelconque des revendications précédentes, **caractérisé en ce que** le remplacement de la régulation de la vitesse de rotation se produit par le biais d'une interrogation de la demande de couple de rotation qui gèle une part régulante à sa valeur momentanée en vue de réguler l'écart de régulation en présence d'une demande de couple de rotation et limite une part non régulante à la taille de la part régulante avec un signe négatif.

Fig. 1

Fig. 2

Fig. 3

**Fig. 4a**

**Fig. 4b**

Fig. 5a

Fig. 5b

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

* DE 102004062012 A1